# EUROPEAN PATENT APPLICATION

(11) **EP 4 650 216 A1**
(43) Date of publication of application: **19.11.2025**
(21) Application number: 23917332.1
(22) Date of filing: 28.12.2023
(51) Int. Cl.: B60N 2/28

(54) **SAFETY SEAT**

(30) Priority: 17.01.2023 CN 202310093538
(71) Applicant: Ningbo Baby First Baby Products Co., Ltd., Ningbo, Zhejiang 315412 (CN)
(72) Inventor: XU, Dong, Ningbo, Zhejiang 315412 (CN); WANG, Youping, Ningbo, Zhejiang 315412 (CN)
(74) Representative: Herrmann, Uwe
(86) International application number: PCT/CN2023/142712
(87) International publication number: WO 2024/152867

(57) **Abstract**

Provided is a safety seat (20), including a first International Standards Organization FIX (ISOFIX) telescopic mechanism (50) and a second ISOFIX telescopic mechanism (40) arranged independently of each other. The first ISOFIX telescopic mechanism (50) and the second ISOFIX telescopic mechanism (40) are symmetrically arranged and are configured to connect to a seat (10) of a vehicle. One of the first ISOFIX telescopic mechanism (50) and the second ISOFIX telescopic mechanism (40) is capable of automatically retracting, and the other is provided with a locking device to prevent retraction, allowing the safety seat (20) to rotate leftward or rightward. According to the safety seat (20), when a child occupant (30) is thrown backward, the safety seat (20) rotates leftward or rightward to obliquely contact the head of the child occupant (30) and cause the head of the child occupant (30) to rotate. The absorption of energy by means of rotation of the head of the child occupant (30) prevents excessive acceleration of the head of the child occupant (30), thereby achieving an effective protection effect.

## Description

### TECHNICAL FIELD

The present invention relates to the technical field of child safety seats, and specifically to a safety seat.

### BACKGROUND

A child safety seat refers to a device that allows a child occupant to sit or lie therein. Its design intention is to reduce the risk of injury to children by restricting the movement of their bodies in the event of vehicle collisions or sudden speed changes. With the popularization of the R129 regulation, to solve the problem of excessive acceleration of the head of the child, most child safety seats use slow-rebound materials with better energy absorption on the inner side of the headrest, resulting in rising costs or increasing the thickness of energy-absorbing materials. However, the increased thickness will cause neck bending of the child, reducing the riding comfort.

### SUMMARY

An objective of the present invention is to provide a safety seat, which can solve the problem of excessive acceleration of the head of the child and reduce the impact force between the head of the child and the safety seat, to protect the head of the child.

To achieve the above objectives, the following technical solutions are adopted in the present invention. A safety seat includes a first International Standards Organization FIX (ISOFIX) telescopic mechanism and a second ISOFIX telescopic mechanism arranged independently of each other, where the first ISOFIX telescopic mechanism and the second ISOFIX telescopic mechanism are symmetrically arranged and are configured to connect to a seat of a vehicle, one of the first ISOFIX telescopic mechanism and the second ISOFIX telescopic mechanism is capable of automatically retracting, and the other is provided with a locking device to prevent retraction, allowing the safety seat to rotate leftward or rightward.

Preferably, the safety seat further includes a seat body, where the first ISOFIX telescopic mechanism and the second ISOFIX telescopic mechanism are respectively arranged on left and right sides of a bottom of the seat body, the first ISOFIX telescopic mechanism includes a first sleeve and a first housing, the first housing is slidably arranged in the first sleeve, the first sleeve is arranged on one side of the bottom of the seat body, the first housing is configured to connect to a first anchor rod on the seat of the vehicle, the second ISOFIX telescopic mechanism includes a second sleeve and a second housing, the second housing is slidably arranged in the second sleeve, the second sleeve is arranged on the other side of the bottom of the seat body, and the second housing is configured to connect to a second anchor rod on the other side of the seat of the vehicle.

Preferably, a seat base is arranged at the bottom of the seat body, the seat base includes a seat base upper shell and a seat base lower shell, the seat base upper shell and the seat base lower shell are connected in a vertical direction to form a mounting cavity, the mounting cavity is annular, the first sleeve is connected to the seat base lower shell by a first connection member, the second sleeve is connected to the seat base lower shell by a second connection member, and the first sleeve and the second sleeve are arranged in the mounting cavity.

Preferably, the first connection member is an L-shaped connection member including a first plate and a second plate perpendicular to each other, the first plate is connected to a side wall of the first sleeve, the second plate is connected to the seat base lower shell, the seat base lower shell is provided with two mounting columns, the second plate is provided with two mounting holes corresponding to the two mounting columns, the two mounting columns and the two mounting holes are provided in a length direction of the first sleeve, and the second connection member is an L-shaped connection member.

Preferably, the safety seat is further provided with a supporting curved surface configured to support a head of a child occupant, the safety seat further includes a C-shaped headrest, and the supporting curved surface is an inner side surface of the C-shaped headrest.

Preferably, a first gear member, a first catch, a first connection locking block, and an elastic reset mechanism are arranged in the first housing, the first gear member is rotatably connected to the first housing through a front pin shaft, the first catch is rotatably connected to the first housing through a rear pin shaft, the first catch is configured to engage with the first anchor rod on the vehicle, the first sleeve is provided with a plurality of first gear holes arranged at intervals, the first gear member is configured to be inserted into one of the plurality of first gear holes to lock the first sleeve, the elastic reset mechanism is configured to apply opposite forces to the first connection locking block and the first catch, and an end portion of the first connection locking block exactly presses against the first catch, to lock the first catch at a current position.

Preferably, the second ISOFIX telescopic mechanism includes a second sleeve, a second housing slidably arranged in the second sleeve, and a second gear member rotatably arranged in the second housing, the locking device is configured as a locking member, the second sleeve is provided with a plurality of second gear holes, the second gear member is provided with a locking protrusion configured to be inserted into one of the plurality of second gear holes to prevent the second housing from extending out relative to the second sleeve, the locking member is movably provided on one of the second sleeve and the second housing, a plurality of locking holes are provided on the other of the second sleeve and the second housing, and the locking member is provided with an insertion portion configured to be inserted into one of the plurality of locking holes to prevent the second housing from retracting relative to the second sleeve.

Preferably, the locking member is slidably arranged above the second sleeve, the plurality of locking holes are provided on the second housing, the insertion portion includes a locking surface and a guide surface, the second housing is configured to press against the guide surface to drive the locking member to disengage from the one of the plurality of locking holes, the second housing is configured to press against the locking surface to achieve position limiting, the locking surface is arranged facing away from the second gear member, the locking surface is a plane substantially perpendicular to the plurality of locking holes, and the guide surface is an inclined surface arranged facing toward the second gear member.

Preferably, the second ISOFIX telescopic mechanism includes a second sleeve, a second housing slidably arranged in the second sleeve, and a second gear member rotatably arranged in the second housing, the second gear member is configured to rotate from a locked position to an unlocked position to unlock the second sleeve, the locking device includes a latch and an elastic member, the latch is arranged opposite to the second gear member, the elastic member configured to retain the latch at an initial position, and when the second housing has an acceleration to retract into the second sleeve, the latch overcomes a restoring force of the elastic member and moves away from the initial position to a rotational path of the second gear member due to inertia, to prevent the second gear member from rotating to unlock the second sleeve.

Preferably, the locking device further includes a mounting base, the mounting base is connected to the second housing and is arranged opposite to the second gear member, the latch is slidably arranged on the mounting base, the elastic member applies, to the latch, the restoring force away from the second gear member, the mounting base is provided with a limiting portion, and the limiting portion is configured to press against the latch and cooperate with the elastic member to retain the latch at the initial position.

Preferably, the elastic member is arranged along a height direction of the second housing, a first end of the elastic member is connected to the second housing, a second end of the elastic member is provided with the latch, the elastic member continuously applies the restoring force to the latch to retain the latch at the initial position, and when the second housing has the acceleration to retract into the second sleeve, the first end of the elastic member is driven by the second housing, the second end of the elastic member is deviated due to inertia of the latch, and the latch swings to the rotational path of the second gear member, to prevent the second gear member from rotating to unlock the second sleeve; and the latch is arranged on a top of the elastic member.

Compared with the prior art, the present invention has the following advantages. When a child occupant is thrown backward, the safety seat rotates leftward or rightward to obliquely contact the head of the child occupant and cause the head of the child occupant to rotate. For conventional safety seats, when a child is thrown backward, the head of the child exactly faces a back of the safety seat, and is likely to be injured by impact. According to the present invention, the absorption of energy by means of rotation of the head of the child occupant prevents excessive acceleration of the head of the child occupant, thereby achieving an effective protection effect.

### BRIEF DESCRIPTION OF THE DRAWINGS

FIG. 1 is a schematic three-dimensional structural diagram of a safety seat mounted on a seat of a vehicle.
FIG. 2 is a schematic structural exploded view of FIG. 1.
FIG. 3 is a schematic diagram of a safety seat in an initial state.
FIG. 4 is a partial schematic structural diagram of a safety seat in an initial state.
FIG. 5 is a schematic diagram showing a child moving forward.
FIG. 6 is a schematic diagram showing a child being thrown backward.
FIG. 7 is a schematic diagram showing rotation of the head of a child;
FIG. 8 is a partial schematic structural diagram of a safety seat tilted in a left-right direction;
FIG. 9 is another partial schematic structural diagram of a safety seat tilted in a left-right direction;
FIG. 10 is a schematic cross-sectional view of a first ISOFIX telescopic mechanism.
FIG. 11 is a schematic cross-sectional view of a first ISOFIX telescopic mechanism during retraction.
FIG. 12 is a first schematic cross-sectional view of a second ISOFIX telescopic mechanism.
FIG. 13 is a first schematic diagram of a second ISOFIX telescopic mechanism in an extended state.
FIG. 14 is a first schematic diagram of a second ISOFIX telescopic mechanism during retraction.
FIG. 15 is a first partial schematic structural diagram of a second ISOFIX telescopic mechanism.
FIG. 16 is a second schematic cross-sectional view of a second ISOFIX telescopic mechanism.
FIG. 17 is a second schematic diagram of a second ISOFIX telescopic mechanism during retraction.
FIG. 18 is a second schematic diagram of a second ISOFIX telescopic mechanism in an anti-retraction state.
FIG. 19 is a second partial schematic structural diagram of a second ISOFIX telescopic mechanism.
FIG. 20 is a third schematic cross-sectional view of a second ISOFIX telescopic mechanism.
FIG. 21 is a third schematic diagram of a second ISOFIX telescopic mechanism in an anti-retraction state.

In the drawings, the reference numerals respectively represent: 10. seat of vehicle; 20. safety seat; 30. child occupant; 21. seat base lower shell; 211. mounting column; 22. seat base upper shell; 23. seat body; 24. headrest; 40. second ISOFIX telescopic mechanism; 50. first ISOFIX telescopic mechanism. 61. first connection member; 611. first plate; 612. second plate; 612a. mounting hole; 62. second connection member;
51. first sleeve; 51a. first gear hole; 52. first housing; 53. first gear member; 54. front pin shaft; 55. first connection locking block; 56. elastic reset mechanism; 57. first catch; 58. rear pin shaft;
41. second sleeve; 41a. second gear hole; 42. second housing; 42a. locking hole; 43. second gear member; 431. locking protrusion; 45. second connection locking block; 90. locking member; 91. insertion portion; 911. locking surface; 912. guide surface; 92. connection portion;
60. mounting base; 61. limiting portion; 70. elastic member; 80. latch; 432. protruding portion; 601. bottom surface; 602. first side surface; 6021. first raised portion; 603. second side surface; 6031. second raised portion; 81. first end portion; 82. intermediate connection segment; 821. contact protrusion; 83. second end portion;
4321. recessed portion; 4322. flat pressing surface; 4323. curved pressing surface; 831. first protrusion; 832. rod portion; 833. second protrusion.

### DETAILED DESCRIPTION OF THE EMBODIMENTS

The present invention will be further described through specific embodiments. It should be noted that the embodiments or technical features described below may be arbitrarily combined to form new embodiments without conflict.

In the description of the present invention, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention.

It should be noted that in the specification and claims of the present invention, the terms such as "first" and "second" are intended to distinguish between similar objects but do not indicate a particular order or sequence.

In the specification and claims of the present invention, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

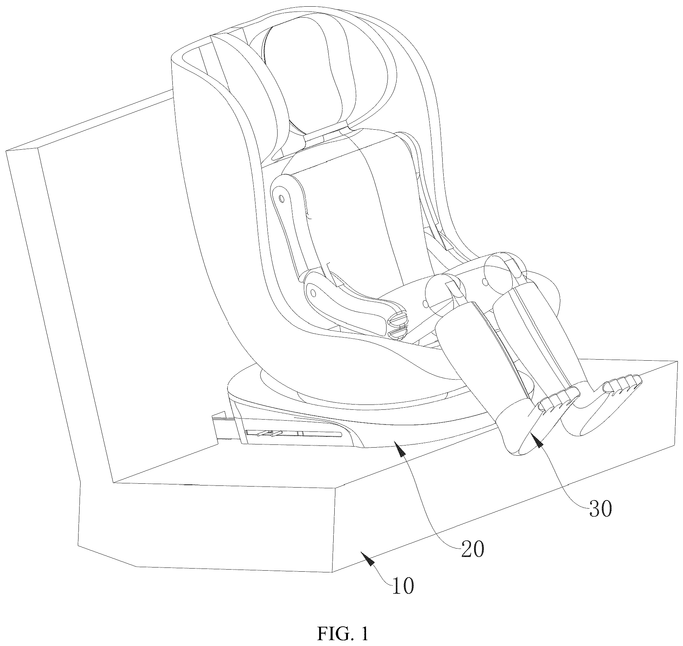

Embodiment 1 of the present invention provides a safety seat. As shown in FIG. 1 to FIG. 8, the safety seat includes a first ISOFIX telescopic mechanism 50 and a second ISOFIX telescopic mechanism 40 arranged independently of each other. The first ISOFIX telescopic mechanism 50 and the second ISOFIX telescopic mechanism 40 are symmetrically arranged and are configured to connect to a seat 10 of a vehicle. One of the first ISOFIX telescopic mechanism 50 and the second ISOFIX telescopic mechanism 40 is capable of automatically retracting, and the other is provided with a locking device to prevent retraction, allowing the safety seat 20 to rotate leftward or rightward.

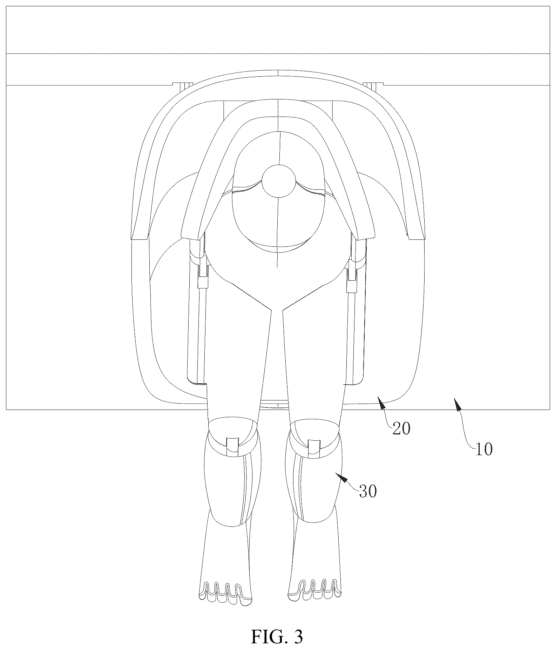

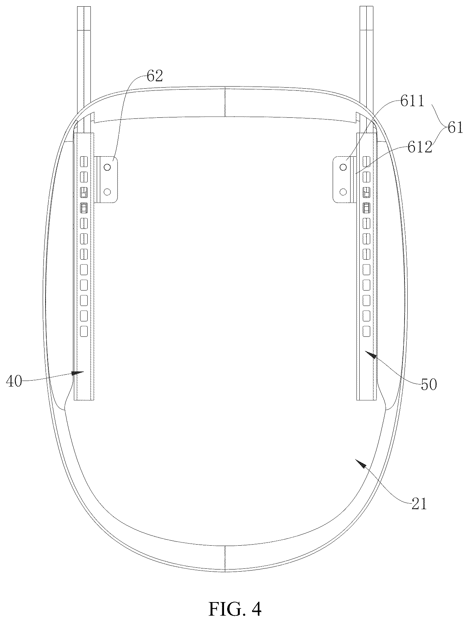

FIG. 3 shows an initial state of a safety seat 20 for a child occupant 30, where the child occupant 30 is secured in the safety seat 20 for the child occupant 30 by a seat belt. In this case, the first ISOFIX telescopic mechanism 50 and the second ISOFIX telescopic mechanism 40 extend by the same length, as shown in FIG. 4.

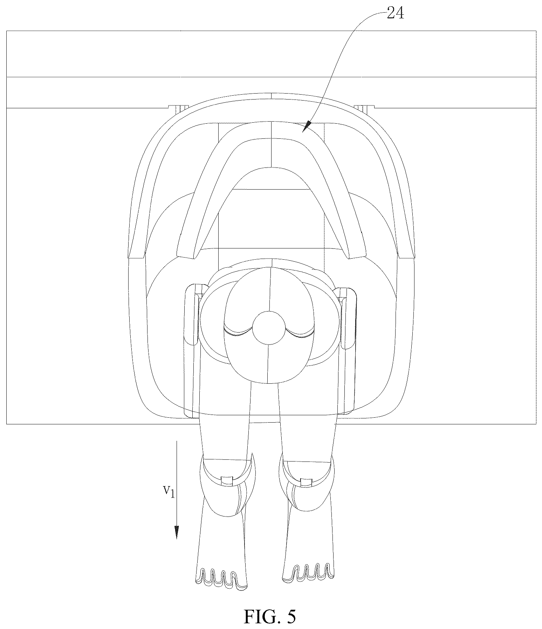

When the vehicle suddenly decelerates, the child occupant 30 and the safety seat 20 have a tendency to continue to move forward at the original speed due to inertia, and the seat 10 of the vehicle decelerates synchronously with the deceleration of the vehicle. In this case, the child occupant 30 drags the safety belt to move due to inertia. As shown in FIG. 5, V₁ represents a movement direction of the child occupant 30, and in this case, the seat 10 of the vehicle applies a backward instantaneous pulling force to the safety seat 20 through the first ISOFIX telescopic mechanism 50 and the second ISOFIX telescopic mechanism 40, to cause the safety seat 20 for the child occupant 30 to remain stationary relative to the seat 10 of the vehicle.

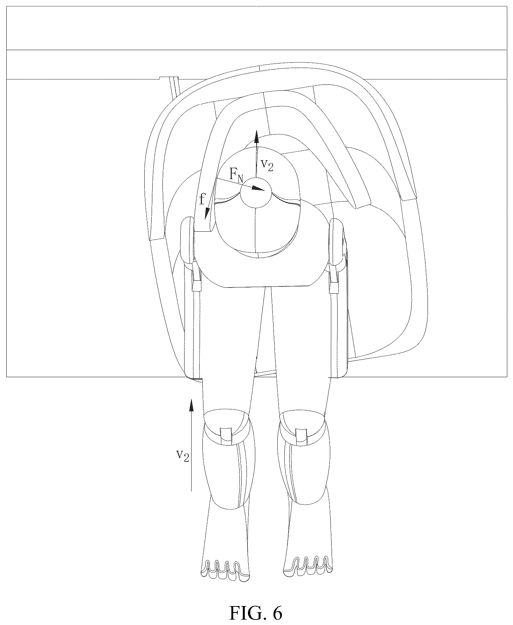

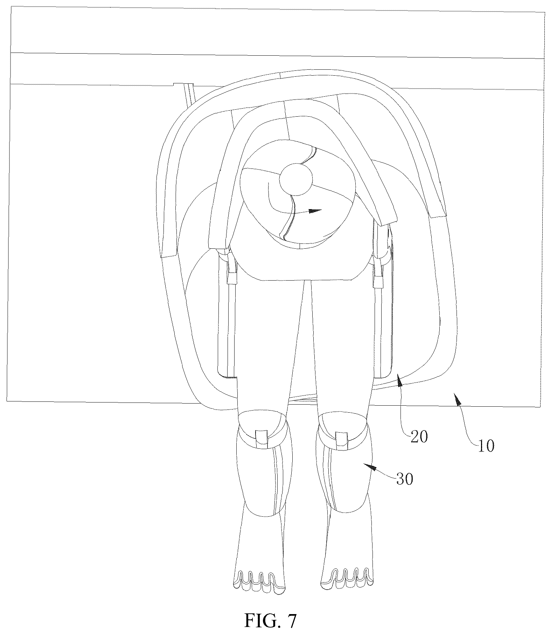

After the child occupant 30 moves forward for a distance, the seat belt applies a pulling force to the child occupant to prevent the child occupant from moving forward further. Then, the seat 10 of the vehicle is reset after compression, and the safety seat 20 for the child occupant 30 and the child occupant 30 are respectively thrown backward to their original positions. Since one of the first ISOFIX telescopic mechanism 50 and the second ISOFIX telescopic mechanism 40 is capable of automatically retracting and the other is provided with a locking device to prevent retraction, only one side of the ISOFIX assembly system retracts, so that the ISOFIX telescopic mechanisms on the left and right sides extend by different lengths. In this case, the retracted side moves toward a backrest of the seat 10 of the vehicle, so that the safety seat 20 for the child occupant 30 rotates in a horizontal direction as a whole and tilts leftward or rightward relative to the seat 10 of the vehicle, and the child occupant is thrown back to the original position. As shown in FIG. 6, V₂ represents a movement direction of the child occupant 30. Since the safety seat 20 undergoes horizontal rotation, the head of the child occupant does not directly face a supporting curved surface in the center of the safety seat, but falls on a left or right side, not the center, of the head supporting curved surface when the child occupant returns to the original position. Because of the existence of V₂, there is relative movement between the head and the supporting curved surface, the supporting curved surface applies, to the head of the child occupant 30, a supporting force F_{N} perpendicular to the supporting curved surface and a friction force F_{N} perpendicular to the supporting force F_{N}, causing the head of the child occupant 30 to rotate. As shown in FIG. 7, the supporting curved surface can guide the head of the child occupant 30 to rotate, to absorb energy when the head is impacted. It has been proved through dynamic tests that the safety seat 20 can greatly reduce the injury to the head caused by impact when the child occupant 30 is thrown backward. However, conventional safety seats 20 are not provided with a locking device to prevent retraction, so that the seat for the child occupant 30 will not rotate leftward or rightward, and when the child occupant 30 is thrown backward, the child occupant 30 returns to the original position with the head directly facing the supporting curved surface and receives an impact force and acceleration that the head cannot bear.

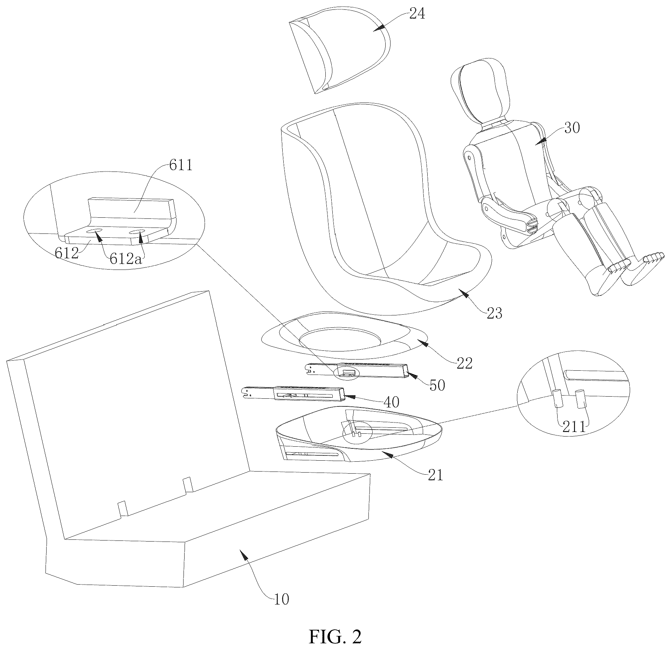

To be specific, as shown in FIG. 1 and FIG. 2, the safety seat 20 includes a seat body 23. The first ISOFIX telescopic mechanism 50 and the second ISOFIX telescopic mechanism 40 are respectively mounted on left and right sides of a bottom of the seat body 23. The child occupant 30 rides in the seat body 23. To mount the safety seat 20 on the seat 10 of the vehicle, the two ISOFIX telescopic mechanisms are extended to respectively align and engage with two anchor points on the seat 10 of the vehicle, then the ISOFIX telescopic mechanisms are adjusted to a suitable length, and an anti-rollover device such as a support leg or a top tether is mounted.

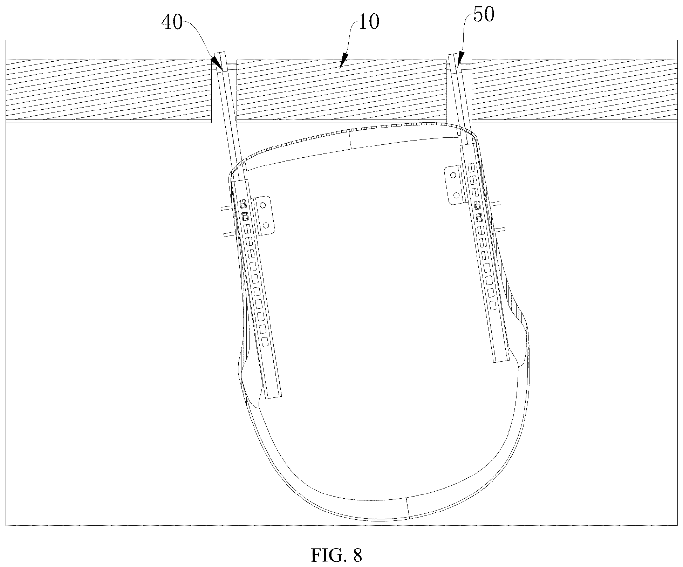

Further, as shown in FIG. 4, the first ISOFIX telescopic mechanism 50 includes a first sleeve 51 and a first housing 52. The first housing 52 is slidably arranged in the first sleeve 51. The first sleeve 51 is arranged on one side of the bottom of the seat body 23. The first housing 52 is configured to connect to a first anchor rod on the seat 10 of the vehicle. Similarly, the second ISOFIX telescopic mechanism 40 includes a second sleeve 41 and a second housing 42. The second housing 42 is slidably arranged in the second sleeve 41. The second sleeve 41 is arranged on the other side of the bottom of the seat body 23. The second housing 42 is configured to connect to a second anchor rod on the other side of the seat 10 of the vehicle. The left and right ISOFIX telescopic mechanisms are independently of each other, and when the lengths of the left and right ISOFIX telescopic mechanisms are different, the left and right ISOFIX telescopic mechanisms drive the seat base to rotate leftward or rightward as shown in FIG. 8, to cause the seat body 23 and a headrest 24 on the seat body 23 to rotate leftward or rightward together.

A seat base is arranged at the bottom of the seat body 23. The seat base is configured to be placed on a seat surface of the seat 10 of the vehicle. The seat base includes a seat base upper shell 22 and a seat base lower shell 21. The seat base upper shell 22 and the seat base lower shell 21 are connected in a vertical direction to form a mounting cavity. Since the ISOFIX telescopic mechanisms on the left and right sides are independently of each other, there is no need to provide a crossbar for synchronization between the first housing 52 and the second housing 42, so that the structure that needs to be assembled in the seat base is simplified. The mounting cavity is annular. The first sleeve 51 and the second sleeve 41 can be respectively mounted on two sides of the mounting cavity. The annular structure has good stress stability. The first sleeve 51 is connected to the seat base lower shell 21 by a first connection member 61. The second sleeve 41 is connected to the seat base lower shell 21 by a second connection member 62. The first sleeve 51 and the second sleeve 41 are arranged in the mounting cavity and are thus shielded and protected by the seat base.

Further, the first connection member 61 is an L-shaped connection member including a first plate 611 and a second plate 612 perpendicular to each other, the first plate 611 is connected to a side wall of the first sleeve 51, and the second plate 612 is connected to the seat base lower shell 21. Still further, the seat base lower shell 21 is provided with two mounting columns 211, the second plate 612 is provided with two mounting holes 612a, and the first sleeve 51 is fixedly connected to the seat base lower shell 21 by inserting the two mounting columns 211 into the two mounting holes 612a. The connection method is simple and easy to operate. The two mounting columns 211 are provided in a length direction of the first sleeve 51, and correspondingly, the two mounting holes 612a are provided, to prevent tilting of the first sleeve 51 relative to the seat base lower shell 21 in a left-right direction. The second connection member 62 is also an L-shaped connection member.

It can be understood that the first ISOFIX telescopic mechanism 50 may be the same as the second ISOFIX telescopic mechanism 40 except for the locking device, and therefore can be manufactured using the same set of molds, thereby reducing the assembly difficulty of the ISOFIX telescopic mechanisms.

It can be understood that the safety seat 20 is necessarily provided with a supporting curved surface configured to support the head of the child occupant. In this embodiment, the safety seat 20 further includes a C-shaped headrest 24, and the supporting curved surface is an inner side surface of the headrest 24. It can be understood that the headrest 24 has a larger curved arc than the seat body 23, and the use of the inner side surface of the headrest 24 as the supporting curved surface has a visible effect of guiding the rotation of the head, and can achieve a significant energy-absorbing effect in the event of a collision. The headrest 24 may be made of an energy-absorbing material to improve the cushioning energy-absorbing effect. The headrest 24 is detachably arranged relative to the seat body 23 and has an adjustable height, to facilitate cleaning and maintenance and enable the headrest 24 to be suitable for child occupants 30 of different ages.

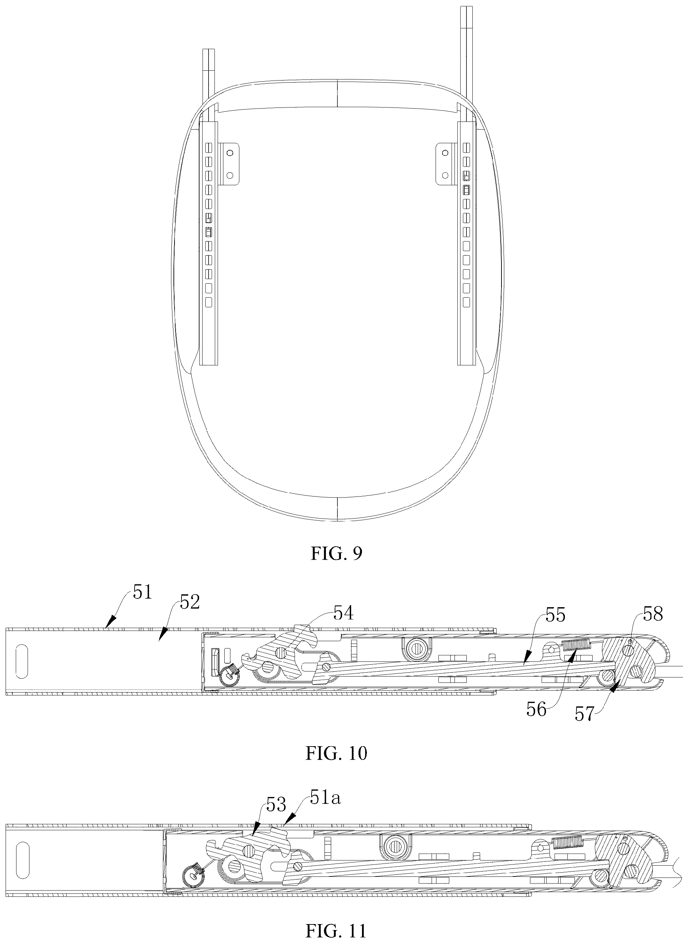

In this embodiment, the second ISOFIX telescopic mechanism 40 on the right side of the child occupant 30 is provided with a locking device, and the first ISOFIX telescopic mechanism 50 on the left side of the child occupant 30 is capable of automatically retracting. In some other embodiments, as shown in FIG. 9, the ISOFIX telescopic mechanism on the right side of the child occupant 30 is capable of automatically retracting, and the ISOFIX telescopic mechanism on the left side of the child occupant 30 is provided with a locking device.

Embodiment 2: Based on Embodiment 1, this embodiment further refines the structure of the first ISOFIX telescopic mechanism 50. As shown in FIG. 10 and FIG. 11, a first gear member 53, a first catch 57, a first connection locking block 55, and an elastic reset mechanism 56 are arranged in the first housing 52. The first gear member 53 is rotatably connected to the first housing 52 through a front pin shaft 54. The first catch 57 is rotatably connected to the first housing 52 through a rear pin shaft 58. The first catch 57 is configured to engage with an anchor rod on the vehicle. The first sleeve 51 is provided with a plurality of first gear holes 51a arranged at intervals. The first gear member 53 is configured to be inserted into one of the first gear holes 51a to lock the first sleeve 51. The first ISOFIX telescopic mechanism 50 is in a state shown in FIG. 10 when the vehicle travels at a constant speed. In this case, the elastic reset mechanism 56 is configured to apply opposite forces to the first connection locking block 55 and the first catch 57, and an end portion of the first connection locking block 55 exactly presses against the first catch 57, to lock the first catch 57 at a current position. When the safety seat 20 is thrown backward relative to the seat 10 of the vehicle, i.e., the first housing 52 has a relative forward acceleration relative to the first sleeve 51, the anchor rod on the vehicle exerts a leftward force to the first catch 57. Because the catch is rotatably connected to the first housing 52 through the rear pin shaft 58 and the first catch 57 is locked by the first connection locking block 55, the first catch 57 cannot rotate, and has to transmit the force from the anchor rod to the first housing 52 through the rear pin shaft 58, causing the first housing 52 to move leftward. The first housing 52 drives the first gear member 53 to move leftward as a whole through the front pin shaft 54. In this case, the first sleeve 51 moves rightward along with the entire safety seat 20, and a top of the first gear member 53 is driven by the first sleeve 51 at an edge of the corresponding first gear hole 51a to obtain a tendency to move rightward relative to the front pin shaft 54, causing the first gear member 53 to rotate. In this process, the first connection locking block 55 does not interfere with the first gear member 53, the top of the first gear member 53 can smoothly disengage from the first gear hole 51a as shown in FIG. 11, and the first housing 52 automatically retracts relative to the first sleeve 51. It can be understood that due to the existence of the first gear member 53, the first ISOFIX telescopic mechanism 50 cannot automatically extend, and the first housing 52 can be freely extended relative to the first sleeve 51 only after the first gear member 53 is manually unlocked.

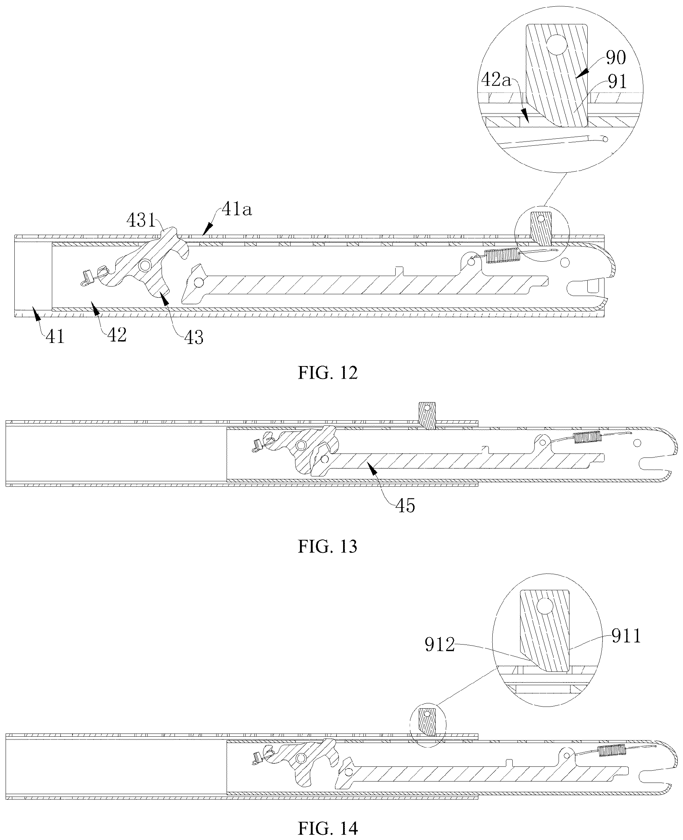

Embodiment 3: Based on the above embodiments, this embodiment provides a structure of the second ISOFIX telescopic mechanism 40. As shown in FIG. 12 to FIG. 15, the second ISOFIX telescopic mechanism 40 includes a second sleeve 41, a second housing 42 slidably arranged in the second sleeve 41, and a second gear member 43 rotatably arranged in the second housing 42. The locking device is configured as a locking member 90. The second sleeve 41 is provided with a plurality of second gear holes 41a. The second gear member 43 is provided with a locking protrusion 431 configured to be inserted into one of the second gear holes 41a to prevent the second housing 42 from extending out relative to the second sleeve 41. The locking member 90 is movably provided on one of the second sleeve 41 and the second housing 42, and a plurality of locking holes 42a are provided on the other of the second sleeve 41 and the second housing 42, and a plurality of locking holes 42a. The locking member 90 is provided with an insertion portion 91 configured to be inserted into one of the plurality of locking holes 42a to prevent the second housing 42 from retracting relative to the second sleeve 41.

Further, the locking member 90 is slidably arranged on the second sleeve 41 or the second housing 42. The locking member 90 is inserted into or disengaged from the one of the plurality of locking holes 42a by slidable connection. Therefore, the locking member 90 has a simple connection structure and is easy to assemble.

Specifically, the locking member 90 is slidably arranged above the second sleeve 41, and the plurality of locking holes 42a are provided on the second housing 42, so that the locking member 90 does not occupy mounting space inside the second housing 42, and therefore does not interfere with the components inside the second housing 42.

In FIG. 12, the insertion portion 91 is inserted into one of the plurality of locking holes 42a, and the locking protrusion 431 is inserted into one of the second gear holes 41a. The unidirectional locking of the locking member 90 prevents the second housing 42 from retracting relative to the second sleeve 41, and the unidirectional locking of the second gear member 43 prevents the second housing 42 from extending out relative to the second sleeve 41, so that the position of the second housing 42 is fixed relative to the second sleeve 41. It can be understood that the arrangement of the second gear member 43 cannot prevent retraction, and when the locking protrusion 431 is inserted into one of the second gear holes 41a and the insertion portion 91 is not inserted into one of the plurality of locking holes 42a, the second housing 42 can freely retract into the second sleeve 41. The automatic retraction process is the same as that of the first ISOFIX telescopic mechanism 50, so it is said that the unidirectional locking of the second gear member 43 prevents the second housing 42 from extending out relative to the second sleeve 41.

In some other embodiments, the locking member 90 is slidably arranged on the second housing 42, and correspondingly, the locking holes 42a are provided on the second sleeve 41.

In some other embodiments, the locking member 90 is rotatably connected to the second housing 42 or the second sleeve 41, a point on the locking member 90 is rotatably connected to the second housing 42 or the second sleeve 41, and the locking member 90 is provided with a free movable end configured to be inserted into one of the locking holes 42a. Specifically, the locking member 90 is rotatably arranged outside the second sleeve 41, and the free movable end of the locking member 90 is configured to be inserted into one of the locking holes 42a on the second housing 42 through an avoidance hole on the second sleeve 41; or the locking member 90 is rotatably arranged inside the second housing 42, and the locking holes 42a are provided on the second sleeve 41. In this case, holes on the second sleeve 41 may be reused as the locking holes 42a and the second gear holes 41a.

It can be understood that the specific mode of movable connection between the locking member 90 and the second housing 42 or the second sleeve 41 is not limited in the present invention, and any movable connection may be used as long as the second gear member 43 and the locking member 90 can respectively realize unidirectional locking in different directions.

In this embodiment, as shown in FIG. 13, the second ISOFIX telescopic mechanism 40 further includes a second connection locking block 45. The second connection locking block 45 can be driven by an external force to move toward the second gear member 43 until the second connection locking block 45 presses against the second gear member 43, so that the second gear member 43 is driven by the second connection locking block 45 to rotate, to cause the locking protrusion 431 to disengage from the second gear hole 41a. In this case, the second housing 42 can be freely extended relative to the second sleeve 41, but cannot retract due to the action of the locking member 90.

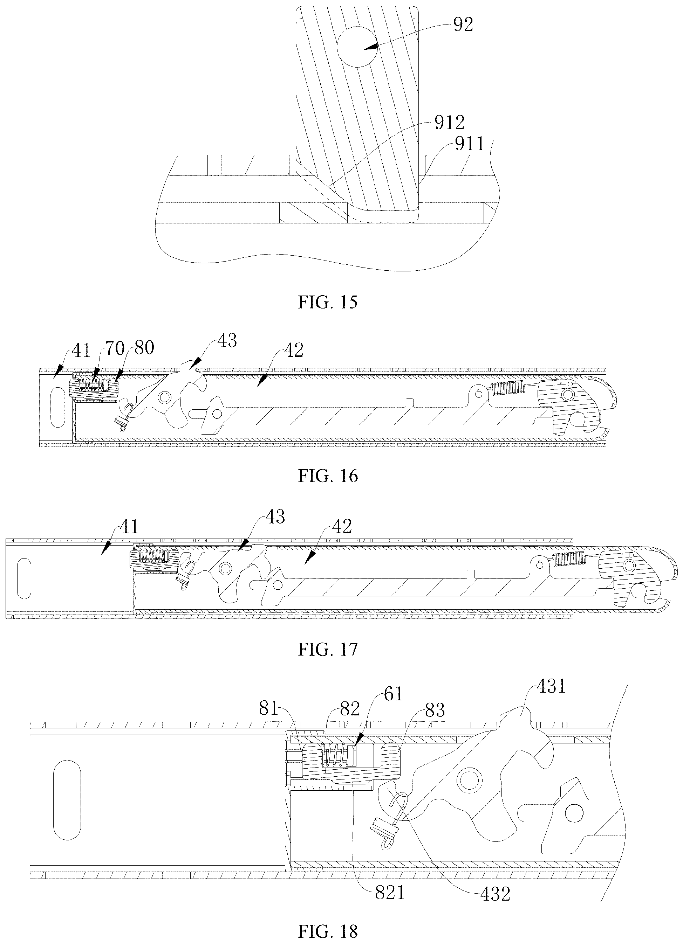

Specifically, as shown in FIG. 15, the insertion portion 91 includes a locking surface 911 and a guide surface 912, the second housing 42 is configured to press against the guide surface 912 to drive the locking member 90 to disengage from the locking hole 42a, and the second housing 42 is configured to press against the locking surface 911 to achieve position limiting. When the second housing 42 is extended relative to the second sleeve 41, the second housing 42 presses against the guide surface 912, causing the locking member 90 to slide upward from a position indicated by dashed lines to disengage from the current locking hole 42a, to allow the second housing 42 to extend outward. When the locking member 90 moves to a next locking hole 42a, the locking member 90 has a tendency to move downward into the locking hole 42a under the action of a corresponding reset mechanism or gravity. In this case, if the second housing 42 continues to extend outward, the second housing 42 presses against the guide surface 912 again to push off the locking member 90.

Specifically, the locking surface 911 is arranged facing away from the second gear member 43, the locking surface 911 is a plane substantially perpendicular to the locking holes 42a, and the guide surface 912 is an inclined surface arranged facing toward the second gear member 43. The insertion portion 91 has a simple structure and is easy to fabricate.

When the locking member 90 is moved upward by an external force, the insertion portion 91 exits the locking hole 42a, the locking surface 911 does not press against the second housing 42, and the second connection locking block 45 does not interfere with the second gear member 43. In this case, the second gear member 43 can disengage from the second gear hole 41a, allowing the second housing 42 to freely retract relative to the second sleeve 41.

It can be understood that to mount the second ISOFIX telescopic mechanism 40 to the seat 10 of the vehicle, first, the second gear member 43 is manually unlocked so that the ISOFIX mechanism is in a state shown in FIG. 13, and the ISOFIX mechanism is adjusted to a maximum length and aligned with and connected to an anchor rod. Then, the locking member 90 is unlocked so that the ISOFIX mechanism is in a state shown in FIG. 14. Afterward, the safety seat 20 is pushed toward the backrest of the seat 10 of the vehicle to cause the second housing 42 to retract to an appropriate position. Finally, the locking member 90 is released into the locking hole 42a, so that the locking member 90 is inserted into the corresponding locking hole 42a and the second gear member 43 is inserted into the corresponding second gear hole 41a. As shown in FIG. 12, in this state, the length of the second ISOFIX telescopic mechanism 40 is locked.

As an improvement, considering that an upper side of the second sleeve 41 is blocked by other parts of the safety seat 20, the locking member 90 further includes a connection portion 92 to facilitate the control and adjustment of the position of the locking member 90. The connection portion 92 is connected to an operating member through a transmission mechanism. The transmission mechanism and the operating member are both arranged on the safety seat 20. The operating member is operable to cause the transmission mechanism to drive the locking member 90 to slide vertically. Through the linkage of the transmission mechanism and the operating member with the locking member 90, the locking member 90 can be unlocked or locked by applying a force to the connection portion 92.

In some embodiments, the transmission mechanism includes a steel cable, which is convenient to arrange. The mounting of the steel cable does not affect the existing internal structure of the safety seat 20, and transmission by the steel cable does not require power supply, thereby conserving energy. The connection portion 92 is a circular through hole, which is easy for the steel cable to pass through. For contents related to steel cable transmission, reference can be made to the braking principle of bicycles, and the details will not be described herein.

In order for the second gear member 43 and the locking member 90 to be respectively inserted into corresponding holes when the second housing 42 is extended or retracted to different degrees, the number of and the distance between the second gear holes 41a are the same as those of the locking holes 42a, so that the ISOFIX mechanism can be locked at a plurality of different lengths.

Further, the second gear hole 41a and the locking hole 42a are of the same size and shape, so that the specifications of the second gear holes 41a and the locking holes 42a are unified to facilitate the formation of the holes.

Additionally, the ISOFIX mechanism further includes a first reset member configured to reset the second gear member 43 and a second reset member configured to reset the second connection locking block 45. Specifically, the first reset member and the second reset member are both tension springs, which have a simple structure and require low costs.

Embodiment 4: Based on the above embodiments, this embodiment provides another specific structure of the second ISOFIX telescopic mechanism 40. The second ISOFIX telescopic mechanism 40 includes a second sleeve 41, a second housing 42 slidably arranged in the second sleeve 41, and a second gear member 43 rotatably arranged in the second housing 42. The second gear member 43 is configured to rotate from a locked position to an unlocked position to unlock the second sleeve 41. The locking device includes a latch 80 and an elastic member 70. The latch 80 is arranged opposite to the second gear member 43. The elastic member 70 configured to retain the latch 80 at an initial position. When the second housing 42 has an acceleration to retract into the second sleeve 41, the latch 80 overcomes a restoring force of the elastic member 70 and moves away from the initial position to a rotational path of the second gear member 43 due to inertia, to prevent the second gear member 43 from rotating to unlock the second sleeve 41.

It can be understood that when the second housing 42 has an acceleration to retract into the second sleeve 41, the elastic member 70 needs to apply a large forward pulling force to the latch 80 in order to cause the latch 80 to move forward at the same acceleration as the second housing 42. When the required force is greater than the restoring force that the elastic member 70 can apply to the latch 80, the elastic member 70 deforms and the movement of the latch 80 away from the initial position is delayed.

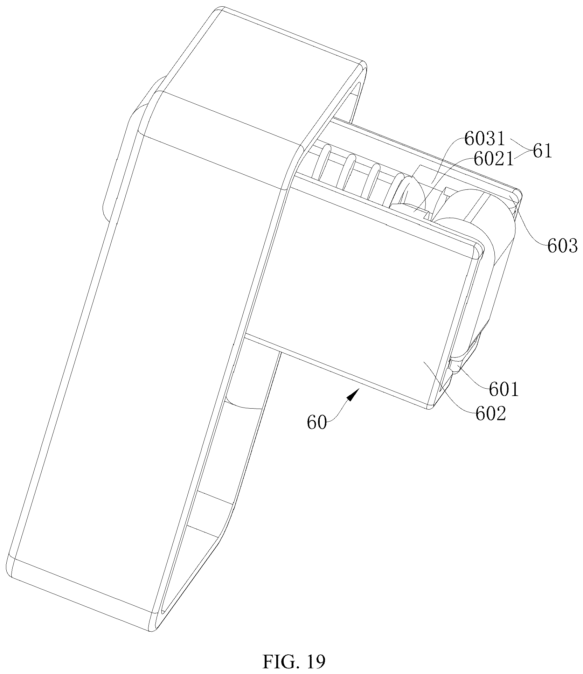

Specifically, as shown in FIG. 16 to FIG. 19, in this embodiment, the locking device further includes a mounting base 60. The mounting base 60 is connected to the second housing 42 and is arranged opposite to the second gear member 43. The latch 80 is slidably arranged on the mounting base 60. The elastic member 70 applies, to the latch 80, a restoring force away from the second gear member 43, to retain the latch 80 at the initial position.

As shown in FIG. 16, the latch 80 is at the initial position, and the locking protrusion 431 of the second gear member 43 is inserted into one of the second gear holes 41a on the second sleeve 41 through an upper wall of the second housing 42. In this case, the second gear member 43 is at the locked position, and the second sleeve 41 is locked and cannot be extended relative to the second housing 42.

Generally, for example, when the forward acceleration of the second housing 42 relative to the latch 80 is small or zero in a case where the vehicle travels at a constant speed or in the process of mounting the ISOFIX telescopic mechanism to the seat 10 of the vehicle, the latch 80 cannot overcome the restoring force of the elastic member 70 to interfere with the second gear member 43, and the second gear member 43 can be rotated to the unlocked position to unlock the second sleeve 41 as shown in FIG. 17. In this case, the second housing 42 can retract into the second sleeve 41.

To mount the ISOFIX telescopic mechanism to the seat 10 of the vehicle, first, first, the second gear member 43 is manually unlocked, the ISOFIX telescopic mechanism is adjusted to a maximum length, and the catch is aligned with an anchor rod on the vehicle and pushed inward, so that the catch is engaged with the anchor rod on the vehicle. Then, the safety seat 20 is pushed toward the backrest of the seat 10 of the vehicle. In this case, the ISOFIX telescopic mechanism enters a state shown in FIG. 17, and retracts like a conventional ISOFIX telescopic mechanism without a locking device, to facilitate rapid mounting of the ISOFIX telescopic mechanism to the seat 10 of the vehicle.

After the ISOFIX telescopic mechanism is mounted on the seat 10 of the vehicle, the vehicle has a large instantaneous forward acceleration, i.e., the second housing 42 has a large forward acceleration relative to the latch 80, when a collision accident such as a rear-end collision occurs during the traveling of the vehicle, or when the vehicle accelerates and the safety seat 20 is thrown backward. As shown in FIG. 18, a force causing the latch 80 to move rightward is greater than the leftward restoring force of the elastic member 70, and the latch 80 blocks the rotational path of the second gear member 43 before the second gear member 43 is disengaged from the second gear hole 41a, so that the second gear member 43 is locked at the locked position, and the second housing 42 cannot instantaneously retract inward relative to the second sleeve 41.

Correspondingly, one end of the second gear member 43 is provided with a protruding portion 432 configured to press against the latch 80, the protruding portion 432 is provided with an arc pressing surface, the arc pressing surface presses against a bottom surface 601 of the latch 80, and applies an upward force to the latch 80. The latch 80 presses against the upper wall of the second housing 42 and applies a downward force to the arc pressing surface to stop the second gear member 43 from rotating. The locking protrusion 431 of the second gear member 43 inserted into the second gear hole 41a applies a leftward force to the second sleeve 41 to force the second sleeve 41 to move along with the second housing 42. The acting force applied by the arc pressing surface to the latch 80 is in a vertical direction, and no horizontal component force is generated to cause the latch 80 to slide.

The ISOFIX telescopic mechanism further includes a reset member configured to reset the second gear member 43. The reset member is an elastic structure, such as a tension spring. When the vehicle resumes to travel at a constant speed or stops traveling, the second gear member 43 is reset by the reset member, the arc pressing surface leaves the bottom surface 601 of the latch 80, and the latch 80 moves leftward and is thus reset under a restoring force of the elastic member 70.

Further, when the latch 80 is at the initial position, the elastic member 70 is in an unnatural state. The mounting base 60 is provided with a limiting portion 61. The limiting portion 61 is configured to press against the latch 80 and cooperate with the elastic member 70 to retain the latch 80 at the initial position under normal circumstances. It can be understood that the unnatural state refers to a compressed or stretched state of the elastic member 70. Since the latch 80 is subjected to a large elastic restoring force when the latch 80 is at the initial position, the latch 80 can overcome the restoring force of the elastic member 70 and begin to move toward the second gear member 43 only when the second housing 42 has a sufficiently large acceleration relative to the latch 80. By designing an amount of deformation of the elastic member 70 at the initial position, an acceleration threshold that enables the latch 80 to move can be adjusted. By selecting an elastic coefficient of the elastic member 70, the latch 80 can move quickly after the current acceleration of the latch 80 exceeds the set acceleration threshold, so that the latch 80 moves to above the second gear member 43 to interfere with the second gear member 43 before the second gear member 43 is disengaged from the second gear hole 41a.

Further, in a direction from the latch 80 to the second gear member 43, the latch 80 includes a first end portion 81, an intermediate connection segment 82, and a second end portion 83 in sequence. The intermediate connection segment 82 is arranged along a length direction of the second housing 42. The elastic member 70 is arranged parallel to the intermediate connection segment 82. The first end portion 81 or the second end portion 83 are arranged perpendicular to the intermediate connection segment 82 to connect to the elastic member 70. The second end portion 83 is configured to be inserted to above the second gear member 43 along the length direction of the second housing 42. Both the elastic member 70 and the latch 80 are arranged along the length direction of the second housing 42. The latch 80 is slidably inserted to above the second gear member 43 along the length direction of the second housing 42. The elastic force, the sliding direction of the latch 80, and the direction of the acceleration of the second housing 42 relative to the latch 80 are all on the same straight line to prevent the latch 80 from deviating from a slide rail on the mounting base 60.

In this embodiment, the first end portion 81 and the second end portion 83 are arranged perpendicular to the intermediate connection segment 82, so that the latch 80 is approximately U-shaped. The limiting portion 61 is arranged between the first end portion 81 and the second end portion 83. The elastic member 70 is a compression spring, which requires low costs and is available in a variety of specifications and models. A first end of the compression spring presses against the first end portion 81, and a second end of the compression spring presses against a side of the limiting portion 61 away from the second gear member 43. A side of the limiting portion 61 adjacent to the second gear member 43 is configured to press against the second end portion 83. When the latch 80 is at the initial position, the compression spring is compressed by the second gear member 43 and the limiting portion 61 and continuously applies a leftward force to the second gear member 43. Both the compression spring and the limiting portion 61 are arranged in the recessed area in the middle of the approximately U-shaped latch 80, thereby achieving a compact structure. The limiting portion 61 is not only used for pressing against the latch 80, but also used for mounting the compression spring, so that the structure is simplified.

In some other embodiments, the elastic member 70 may also be a tension spring. In some other embodiments, the latch 80 may also be designed in other shapes, e.g., an L-shape, than the approximate U-shape.

Specifically, the mounting base 60 includes a bottom surface 601601 arranged at a bottom of the latch 80, and a first side surface 602 and a second side surface 603 respectively arranged at two sides of the latch 80. The bottom surface 601, the first side surface 602, and the second side surface 603 together form the slide rail for the latch 80 to slide thereon. An opening is provided at an upper side of the mounting base 60 to facilitate the mounting of the latch 80, the elastic member 70, and the like into the slide rail. The first end portion 81 and the second end portion 83 extend out of the opening and contact the upper wall of the second housing 42. In addition, respective portions of the first end portion 81 and the second end portion 83 which contact the upper wall of the second housing 42 are configured as curved surfaces, thereby reducing the frictional force between the latch 80 and the upper wall of the second housing 42 during sliding of the latch 80.

The intermediate connection segment 82 is provided with a contact protrusion 821 to reduce the contact area. The contact protrusion 821 contacts the bottom surface 601 of the mounting base 60 to reduce the friction between the latch 80 and the bottom surface 601 of the mounting base 60, thereby reducing the resistance caused by other parts than the elastic member 70 to the latch 80 during sliding of the latch 80.

The first side surface 602 is provided with a first raised portion 6021 protruding toward the second side surface 603. The second side surface 603 is provided with a second raised portion 6031 corresponding to the first raised portion 6021. The first raised portion 6021 and the second raised portion 6031 constitute the limiting portion 61. Therefore, the limiting portion 61 has a simple structure and is easy to fabricate.

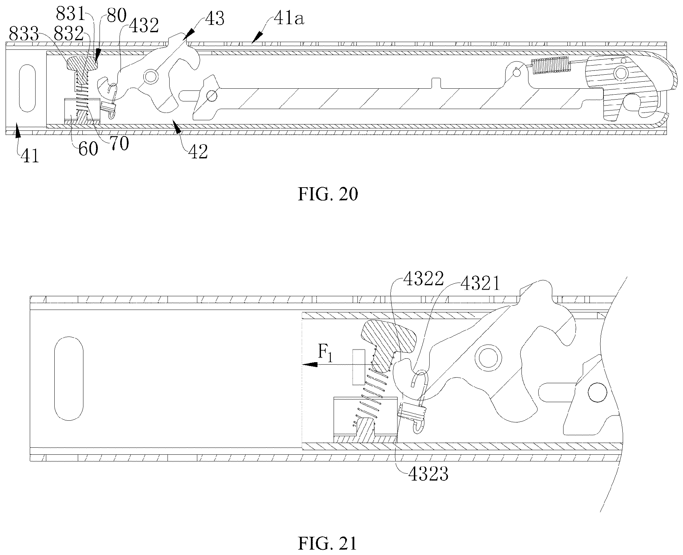

Embodiment 5: Based on the above embodiments, this embodiment provides still another structure of the second ISOFIX telescopic mechanism 40. As shown in FIG. 20 to FIG. 21, the second ISOFIX telescopic mechanism 40 includes a second sleeve 41, a second housing 42 slidably arranged in the second sleeve 41, and a second gear member 43 rotatably arranged in the second housing 42. The second gear member 43 is configured to rotate from a locked position to an unlocked position to unlock the second sleeve 41. The locking device includes a latch 80 and an elastic member 70. The latch 80 is arranged opposite to the second gear member 43. The elastic member 70 configured to retain the latch 80 at an initial position. When the second housing 42 has an acceleration to retract into the second sleeve 41, the latch 80 overcomes a restoring force of the elastic member 70 and moves away from the initial position to a rotational path of the second gear member 43 due to inertia, to prevent the second gear member 43 from rotating to unlock the second sleeve 41.

Further, different from Embodiment 4, in this embodiment, the elastic member 70 is arranged along a height direction of the second housing 42, a first end of the elastic member 70 is connected to the second housing 42, a second end of the elastic member 70 is provided with the latch 80, and the elastic member 70 continuously applies a restoring force to the latch 80 to retain the latch 80 at the initial position. When the second housing 42 has an acceleration to retract into the second sleeve 41, the first end of the elastic member 70 is driven by the second housing 42, the second end of the elastic member 70 is deviated due to inertia of the latch 80, and the latch 80 swings to the rotational path of the second gear member 43 under the action of inertia and the elastic member 70, to prevent the second gear member 43 from rotating to unlock the second sleeve 41.

Further, the latch 80 is arranged on a top of the elastic member 70, the latch 80 is provided with a first protrusion 831 extending toward the second gear member 43, the second gear member 43 is provided with a protruding portion 432 corresponding to the first protrusion 831, and the protruding portion 432 rotates upward to press against the first protrusion 831 when the second gear member 43 is rotated to unlock the second sleeve 41. It can be understood that the elastic member 70 bends rightward when the latch 80 swings, and in this case, the elastic member 70 is able to move leftward to return to its original shape and maintain its upright state.

Generally, when the acceleration of the second housing 42 is small, the force required for the elastic member 70 to drive the latch 80 to move leftward synchronously with the second housing 42 is small, and the elastic member 70 can always be maintained in the upright state without bending. As shown in FIG. 20, because the latch 80 can be fixed at the initial position by the elastic member 70 or be reset to the initial position in a timely manner, and the second gear member 43 only rotates relative to the second housing 42 without displacing in the left-right direction, the latch 80 does not interfere with the rotation of the second gear member 43, and the second gear member 43 can normally rotate to unlock the second sleeve 41. However, when the acceleration of the second housing 42 is large, a large force needs to be applied to the latch 80 to cause the latch 80 to move leftward synchronously with the second housing 42. The required force exceeds a leftward restoring force F₁ that the elastic member 70 can apply to the latch 80. Therefore, the movement speed of the latch 80 is lower than that of the second housing 42, and the elastic member 70 tilts rightward as a whole. As shown in FIG. 21, finally, the latch 80 swings to above the second gear member 43, and interferes with the second gear member 43, so that the second gear member 43 cannot continue to rotate, and the second sleeve 41 cannot be unlocked.

Preferably, the latch 80 is detachably connected to the elastic member 70, and the latch 80 can be removed for maintenance and replacement.

Further, the latch 80 is provided with a rod portion 832, and the rod portion 832 is configured to be inserted into the elastic member 70. The connection method is simple and easy to assemble.

Further, an end portion of the rod portion 832 is provided with a rounded corner configured to guide the insertion of the rod portion 832 into the corresponding hole on the elastic member 70.

Preferably, the elastic member 70 is a spring, and the latch 80 can be fixed by inserting the rod portion 832 into an inner coil of the spring. As such, the structure is simple, and the latch 80 is easy to mount. In addition, the costs of the spring are low, and a wide range of springs are available. It can be understood that by designing the wire diameter, the material, and the effective number of turns of the spring, the elastic coefficient of the spring and the value of the horizontal leftward restoring force F₁ that the spring can generate after bending deformation can be changed, so that when the acceleration of the second housing 42 exceeds a preset value, the spring can quickly undergo bending deformation, causing the latch 80 to swing to above the second gear member 43 before the second gear member 43 is disengaged from the second gear hole 41a.

The latch 80 is provided with a second protrusion 833, and the second protrusion 833 and the first protrusion 831 are respectively located on two sides of the elastic member 70, so that when the latch 80 is at the initial position, the center of gravity of the latch 80 is located above the elastic member 70, to prevent the elastic member 70 from tilting due to the gravity of the latch 80.

Specifically, the latch 80 is substantially T-shaped, i.e., the first protrusion 831 and the second protrusion 833 are symmetrical in the left-right direction, to ensure that the center of gravity of the latch 80 is located exactly above the elastic member 70. A top of the latch 80 is configured as a curved surface. The curved surface is configured to press against the upper wall of the second housing 42 to reduce the frictional force from the upper wall of the second housing 42 during the swing and resetting of the latch 80. The latch 80 has a simple structure which can be integrally formed.

An end portion of the protruding portion 432 is provided with an flat pressing surface 4322 configured to press against the latch 80. A recessed portion 4321 configured to avoid the latch 80 is provided on a first side of the flat pressing surface 4322, to prevent an upper surface of the second gear member 43 from applying a leftward force to the latch 80 to push the latch 80 out of the space above the second gear member 43. A second side of the flat pressing surface 4322 extends downward to form a curved pressing surface 4323. When the latch 80 is at the initial position and the second gear member 43 is rotated to the unlocked position, the curved pressing surface 4323 contacts the latch 80, i.e., the latch 80 is located exactly at an edge of a rotational path of the protruding portion 432 when the latch 80 is at the initial position. In this way, when the spring is bent rightward by a small angle, the latch 80 can be inserted between the upper surface of the second gear member 43 and the upper wall of the second housing 42 to interfere with the second gear member 43.

A reset member is arranged between the protruding portion 432 and the second housing 42. The reset member is configured to reset the second gear member 43. Specifically, the reset member is a tension spring, which is easy to mount and requires low costs.

The latch 80 is connected to the second housing 42 through a mounting base 60. The mounting base 60 includes a bottom surface, and a first side surface and a second side surface respectively arranged on two sides of the bottom surface. An upper side of the bottom surface is connected to the elastic member 70, and a lower side of the bottom surface is connected to a lower wall of the second housing 42. The first side surface and the second side surface are spaced apart along a width direction of the second housing 42. The elastic member 70 is at least partially shielded by the first side surface and the second side surface. Therefore, the elastic member 70 is shielded and protected.

The bottom surface of the mounting base 60 is provided with a mounting boss. The elastic member 70 is detachably arranged on the mounting boss, so that the elastic member 70 can be removed and replaced. When the elastic member 70 is a spring, the spring can be mounted by sleeving an inner coil of the spring over the mounting boss. The mounting structure is simple. An end portion of the mounting boss is provided with a rounded corner to facilitate the sleeving of the spring. The mounting base 60 is integrally formed, so that good structural strength is achieved, and the processing and assembly process is simplified.

The basic principles, main features and advantages of the present invention have been described above. Those skilled in the art should understand that the present invention is not limited to the above embodiments. The descriptions of the embodiments and the specification are only for illustrating the principles of the present invention. Various changes and improvements may be made to the present invention without departing from the spirit and scope of the present invention, and such changes and improvements all fall within the scope of protection claimed by the present invention. The scope of protection claimed by the present invention is defined by the appended claims and their equivalents.

## Claims

1. A safety seat, **characterized by** comprising a first International Standards Organization FIX (ISOFIX) telescopic mechanism and a second ISOFIX telescopic mechanism arranged independently of each other, wherein the first ISOFIX telescopic mechanism and the second ISOFIX telescopic mechanism are symmetrically arranged and are configured to connect to a seat of a vehicle, one of the first ISOFIX telescopic mechanism and the second ISOFIX telescopic mechanism is capable of automatically retracting, and the other of the first ISOFIX telescopic mechanism and the second ISOFIX telescopic mechanism is provided with a locking device to prevent retraction, allowing the safety seat to rotate leftward or rightward.

2. The safety seat according to claim 1, **characterized by** further comprising a seat body, wherein the first ISOFIX telescopic mechanism and the second ISOFIX telescopic mechanism are respectively arranged on left and right sides of a bottom of the seat body, the first ISOFIX telescopic mechanism comprises a first sleeve and a first housing, the first housing is slidably arranged in the first sleeve, the first sleeve is arranged on one side of the bottom of the seat body, the first housing is configured to connect to a first anchor rod on the seat of the vehicle, the second ISOFIX telescopic mechanism comprises a second sleeve and a second housing, the second housing is slidably arranged in the second sleeve, the second sleeve is arranged on the other side of the bottom of the seat body, and the second housing is configured to connect to a second anchor rod on the other side of the seat of the vehicle.

3. The safety seat according to claim 2, **characterized in that** a seat base is arranged at the bottom of the seat body, the seat base comprises a seat base upper shell and a seat base lower shell, the seat base upper shell and the seat base lower shell are connected in a vertical direction to form a mounting cavity, the mounting cavity is annular, the first sleeve is connected to the seat base lower shell by a first connection member, the second sleeve is connected to the seat base lower shell by a second connection member, and the first sleeve and the second sleeve are arranged in the mounting cavity.

4. The safety seat according to claim 3, **characterized in that** the first connection member is an L-shaped connection member comprising a first plate and a second plate perpendicular to each other, the first plate is connected to a side wall of the first sleeve, the second plate is connected to the seat base lower shell, the seat base lower shell is provided with two mounting columns, the second plate is provided with two mounting holes corresponding to the two mounting columns, the two mounting columns and the two mounting holes are provided in a length direction of the first sleeve, and the second connection member is an L-shaped connection member.

5. The safety seat according to any one of claims 2 to 4, **characterized in that** the safety seat is further provided with a supporting curved surface configured to support a head of a child occupant, the safety seat further comprises a C-shaped headrest, and the supporting curved surface is an inner side surface of the C-shaped headrest.

6. The safety seat according to any one of claims 2 to 4, **characterized in that** a first gear member, a first catch, a first connection locking block, and an elastic reset mechanism are arranged in the first housing, the first gear member is rotatably connected to the first housing through a front pin shaft, the first catch is rotatably connected to the first housing through a rear pin shaft, the first catch is configured to engage with the first anchor rod on the vehicle, the first sleeve is provided with a plurality of first gear holes arranged at intervals, the first gear member is configured to be inserted into one of the plurality of first gear holes to lock the first sleeve, the elastic reset mechanism is configured to apply opposite forces to the first connection locking block and the first catch, and an end portion of the first connection locking block exactly presses against the first catch, to lock the first catch at a current position.

7. The safety seat according to any one of claims 1 to 4, **characterized in that** the second ISOFIX telescopic mechanism comprises a second sleeve, a second housing slidably arranged in the second sleeve, and a second gear member rotatably arranged in the second housing, the locking device is configured as a locking member, the second sleeve is provided with a plurality of second gear holes, the second gear member is provided with a locking protrusion configured to be inserted into one of the plurality of second gear holes to prevent the second housing from extending out relative to the second sleeve, the locking member is movably provided on one of the second sleeve and the second housing, a plurality of locking holes are provided on the other of the second sleeve and the second housing, and the locking member is provided with an insertion portion configured to be inserted into one of the plurality of locking holes to prevent the second housing from retracting relative to the second sleeve.

8. The safety seat according to claim 7, **characterized in that** the locking member is slidably arranged above the second sleeve, the plurality of locking holes are provided on the second housing, the insertion portion comprises a locking surface and a guide surface, the second housing is configured to press against the guide surface to drive the locking member to disengage from the one of the plurality of locking holes, the second housing is configured to press against the locking surface to achieve position limiting, the locking surface is arranged facing away from the second gear member, the locking surface is a plane substantially perpendicular to the plurality of locking holes, and the guide surface is an inclined surface arranged facing toward the second gear member.

9. The safety seat according to any one of claims 1 to 4, **characterized in that** the second ISOFIX telescopic mechanism comprises a second sleeve, a second housing slidably arranged in the second sleeve, and a second gear member rotatably arranged in the second housing, the second gear member is configured to rotate from a locked position to an unlocked position to unlock the second sleeve, the locking device comprises a latch and an elastic member, the latch is arranged opposite to the second gear member, the elastic member configured to retain the latch at an initial position, and when the second housing has an acceleration to retract into the second sleeve, the latch overcomes a restoring force of the elastic member and moves away from the initial position to a rotational path of the second gear member due to inertia, to prevent the second gear member from rotating to unlock the second sleeve.

10. The safety seat according to claim 9, **characterized in that** the locking device further comprises a mounting base, the mounting base is connected to the second housing and is arranged opposite to the second gear member, the latch is slidably arranged on the mounting base, the elastic member applies, to the latch, the restoring force away from the second gear member, the mounting base is provided with a limiting portion, and the limiting portion is configured to press against the latch and cooperate with the elastic member to retain the latch at the initial position.

11. The safety seat according to claim 9, **characterized in that** the elastic member is arranged along a height direction of the second housing, a first end of the elastic member is connected to the second housing, a second end of the elastic member is provided with the latch, the elastic member continuously applies the restoring force to the latch to retain the latch at the initial position, and when the second housing has the acceleration to retract into the second sleeve, the first end of the elastic member is driven by the second housing, the second end of the elastic member is deviated due to inertia of the latch, and the latch swings to the rotational path of the second gear member, to prevent the second gear member from rotating to unlock the second sleeve; and the latch is arranged on a top of the elastic member.
